# FASCICULE DE BREVET EUROPEEN

(11) **EP 3 146 745 B1**
(45) Date de publication et mention de la délivrance du brevet: **20.02.2019**
(21) Numéro de dépôt: 15728064.5
(22) Date de dépôt: 19.05.2015
(51) Int. Cl.: H04W 12/06, H04W 12/08, H04L 29/06, G06Q 20/32, G06Q 20/40

(54) **AUTHENTIFICATION UBIQUITAIRE**
ALLGEGENWÄRTIGE AUTHENTIFIZIERUNG
UBIQUITOUS AUTHENTICATION

(30) Priorité: 19.05.2014 FR 1454467
(43) Date de publication de la demande: 29.03.2017
(73) Titulaire: Trust Designer, 59000 Lille (FR)
(72) Inventeur: KETELERS, Hervé, F-59830 Cysoing (FR)
(74) Mandataire: Cabinet Plasseraud
(86) Numéro de dépôt international: PCT/FR2015/051306
(87) Numéro de publication internationale: WO 2015/177453

(56) Documents cités:
- WO-A2-2008/065271
- US-A1- 2003 004 827
- US-A1- 2014 090 039

## Description

### Domaine technique et Art antérieur

La présente invention concerne le domaine de l'authentification dite « *ubiquitaire* ». Elle est définie dans les revendications indépendantes 1, 12, 13 et 14.

L'objet de la présente invention porte plus particulièrement sur l'authentification des personnes pour autoriser sur un site, dit de retrait, le retrait par un tiers d'un article ou d'une marchandise, ou encore l'accès ou la fourniture d'un service.

Un système informatique d'authentification ubiquitaire au sens de l'invention se présente donc dans toute la description qui suit comme un système permettant à une personne de s'authentifier à n'importe quel moment, et ce quelle que soit sa position par rapport à un point de retrait (à distance ou à proximité immédiate).

La présente invention trouve ainsi une application particulièrement avantageuse par exemple dans la grande distribution, les sites d'achat en ligne (ou sites marchand) ou dans les services bancaires en proposant une solution innovante pour limiter, voire supprimer, les fraudes sur un point de retrait.

Les sites marchands prolifèrent sur Internet.

De façon classique, lorsqu'une première personne réalise un achat sur un site marchand, cette personne est invitée à venir récupérer l'article acheté sur un point de retrait tel que par exemple un « *Relais Colis*® » ou une boutique rattachée au site marchand.

Bien souvent, cette première personne ne peut pas se rendre personnellement sur le point de retrait (pour des raisons personnelles, professionnelles, matérielles, etc.) ; dans ce cas, elle demande généralement à une deuxième personne d'aller sur place récupérer l'article en son nom.

Cette démarche repose principalement sur une relation de confiance entre la première et la deuxième personne ; ceci se fait au sein de la famille ou avec une personne de l'entourage proche.

Classiquement, la transaction peut se réaliser correctement sur présentation par la deuxième personne d'un numéro de commande, d'une carte d'identité et/ou d'un mandat signé.

Sur présentation de ces informations, le fournisseur sur le point de retrait peut délivrer l'article à la deuxième personne avec un niveau de confiance acceptable.

Il existe cependant de nombreuses fraudes sur ces points de retrait.

En effet, il est de plus en plus souvent observé que des personnes, peu scrupuleuses, se présentent sur les points de retrait avec de fausses identités, de faux mandats, et des informations très précises sur le ou les articles à récupérer (numéro de commande, mais aussi description de l'article, etc.) ; on note ici que ces informations sont relativement faciles à obtenir sur Internet par des moyens détournés.

Comment dans ce genre de situations réduire la fraude sur le point de retrait ? Comment s'assurer que la personne qui se présente pour retirer l'article est bien mandatée par la personne ayant initié la transaction ?

Le Demandeur observe par ailleurs que c'est bien souvent le fournisseur sur le point de retrait qui prend sur lui la responsabilité de fournir le produit et/ou le service à la personne qui se présente devant lui ; ceci peut lui être préjudiciable.

Le document WO 2008/065271 divulgue un procédé pour autoriser un retrait via un code généré par le fournisseur de service spécifiquement pour le retrait d'un article, d'une marchandise ou l'accès à un service. US 2014/0090039 décrit un procédé d'authentification biométrique d'un utilisateur unique.

La solution proposée dans ce document prévoit donc, pour un seul et même retrait, l'utilisation d'un code à usage unique. Une telle solution est complexe à mettre en oeuvre. Il est par ailleurs observé qu'elle ne répond pas à l'ensemble des problèmes posés.

Le Demandeur considère ainsi qu'aujourd'hui il n'existe pas réellement de solution simple et ergonomique pour sécuriser le retrait d'un article, d'un bien, d'une marchandise ou d'un service sur un point de retrait.

### Objet et résumé de la présente invention

L'objet de la présente invention vise à améliorer la situation décrite ci-dessus.

Un des objectifs de la présente invention est d'autoriser le retrait par un tiers d'un produit et/ou d'un service préalablement sélectionné par une autre personne, ceci en limitant voire en supprimant le risque de fraude.

Un des autres objectifs de la présente invention est de faciliter et de sécuriser l'accès d'une tierce personne à tout service ou à toute transaction d'un article, d'un bien ou d'une marchandise avec l'accord explicite et authentifié du titulaire/bénéficiaire officiel du service ou de la transaction.

Ceci est rendu possible par la présente invention qui propose un procédé d'authentification d'une première personne représentée sur un point de retrait par une deuxième personne pour autoriser le retrait par cette deuxième personne d'un produit et/ou d'un service préalablement sélectionné par cette première personne.

Selon l'invention, il est préalablement requis que la première personne soit munie d'un terminal de communication sur lequel est installé un module logiciel d'authentification (ce module est dédié à l'authentification de la première personne) ; il s'agit par exemple d'un module logiciel se présentant sous la forme d'une application logicielle installée sur le terminal de communication de la première personne.

Toujours selon l'invention, le terminal de communication est apte à communiquer avec un dispositif d'authentification personnel par des moyens de communication sans fil.

Avantageusement, le dispositif d'authentification personnel est un objet connecté ; c'est-à-dire un objet portatif (se présentant par exemple sous la forme d'un porte-clés) communiquant avec son environnement proche par des moyens de communication utilisant une technologie radio telle que par exemple le « *Bluetooth*® », le NFC, ou encore le *« Wifi*® ».

Selon la présente invention, le procédé est mis en oeuvre par des moyens informatiques et comprend, lors d'une phase de retrait, une étape d'acquisition au cours de laquelle un identifiant public du type pseudonyme (ou pseudo) est saisi par la deuxième personne sur une interface homme/machine du point de retrait.

Cet identifiant est ensuite relayé à un serveur central connecté à cette interface.

De préférence, l'identifiant public se présente sous la forme d'un code alphanumérique.

Optionnellement, cet identifiant est de taille variable.

De préférence, l'identifiant public a été préalablement communiqué par la première personne à la deuxième personne, par exemple par SMS ou par mail ; plus simplement, cet identifiant a également pu être communiqué oralement à la deuxième personne.

De préférence, l'interface homme/machine du point de retrait est une borne informatique ; tout autre type d'interface de saisie peut également être envisagé.

Il peut s'agir également de l'ordinateur du fournisseur qui doit délivrer le produit et/ou le service.

Avantageusement, le procédé d'authentification selon la présente invention comporte une étape de transmission ; au cours de cette étape, le serveur central transmet l'identifiant public saisi et une adresse d'identification du service central, dite première adresse, vers un serveur de routage.

De préférence, ce serveur est déporté et est connecté à une base de données.

Par serveur déporté, on entend ici que le serveur de routage est à distance par rapport au serveur central. On parle également de serveur déporté dans le « *Cloud ».*

Avantageusement, la base de données comprend un lien d'association prédéterminé entre l'identifiant public et une adresse d'identification du terminal de communication appartenant à la première personne ; cette adresse est encore appelée ici deuxième adresse.

Avantageusement, le procédé d'authentification selon la présente invention comporte en outre une étape de routage au cours de laquelle le serveur de routage transmet, en fonction de la deuxième adresse associée à l'identifiant public, la première adresse au terminal de communication.

Le serveur de routage se présente ainsi comme un référentiel central de routage permettant d'orienter, de façon universelle, tous les serveurs centraux associés à un point de retrait vers le terminal de communication de la première personne.

Le module logiciel d'authentification installé sur le terminal de communication de la première personne établit alors, en fonction de la première adresse transmise, un chemin d'accès direct entre le serveur central et le terminal de communication.

Une authentification mutuelle peut être envisagée pour l'établissement de ce chemin d'accès entre les deux entités.

De préférence, ce chemin d'accès est sécurisé par chiffrement, par exemple un chiffrement du type SSL.

Le procédé selon l'invention prévoit ensuite une étape de requête au cours de laquelle le serveur central émet via le chemin d'accès une requête d'authentification à destination du terminal de communication.

Avantageusement, suite à une lecture par le dispositif d'authentification personnel d'une signature biométrique, caractéristique de la première personne, le procédé d'authentification comporte une étape d'authentification.

Lors de cette étape, l'empreinte lue est comparée à une signature biométrique de référence enregistrée sur le dispositif d'authentification personnel, pour autoriser le retrait du produit et/ou du service par la deuxième personne.

Grâce à cette succession d'étapes techniques, caractéristique de la présente invention, il est possible pour un tiers, ici la deuxième personne, de récupérer sur un point de retrait un produit et/ou un service sélectionné par une autre personne, ici la première personne.

Ceci est réalisé de façon sécurisée, tant pour la première personne qui va pouvoir récupérer par l'intermédiaire de la deuxième personne son produit, que pour le fournisseur du produit qui a la confirmation que la deuxième personne est bien mandatée par la première personne.

Le fournisseur n'engage pas sa responsabilité en autorisant la délivrance du produit et/ou du service, puisque c'est ici la première personne en s'authentifiant à distance qui autorise le retrait.

Le retrait est par ailleurs plus simple pour la deuxième personne qui n'a qu'à saisir l'identifiant fourni par le mandant, sans devoir se présenter sur le point de retrait avec des pièces justificatives du type carte d'identité, mandat, numéro de commande.

Grâce à la solution proposée dans le cadre de l'invention, autoriser la deuxième personne à procéder à ce retrait requiert simplement :
- une simple saisie de l'identifiant par la deuxième personne, et
- une authentification biométrique à distance de la première personne à l'aide d'un dispositif d'authentification personnel.

Le fournisseur n'intervient quasiment pas dans ce processus ; il ne prend aucune décision et n'engage pas sa responsabilité.

Ainsi, lorsqu'une première personne commande un article sur un site Internet, elle peut demander à une personne de confiance, appelée ici deuxième personne, d'aller récupérer cet article sur un point de retrait tel qu'un « *Relais Colis*® ».

Pour ce faire, il suffit à la première personne de fournir à la deuxième personne le pseudonyme utilisé lors de la commande. Ce pseudonyme se présente comme une donnée publique non sécurisée.

Une fois sur le point de retrait, la deuxième personne doit simplement saisir ce pseudonyme sur une interface homme/machine du type borne informatique.

Le pseudonyme est alors envoyé vers un référentiel de routage qui fournit au terminal de communication de la première personne l'adresse du serveur du point de retrait ; ensuite, un canal de transmission sécurisé est établi entre le terminal et ce serveur ; une requête d'authentification est alors émise via ce canal à destination de la première personne.

La première personne est alors avertie que la personne qu'elle a mandatée est sur place et veut récupérer l'article. Il lui suffit de s'authentifier pour « valider » à distance l'opération et autoriser le retrait.

Cette authentification est de préférence une authentification biométrique.

L'approche proposée dans le cadre de l'invention permet ainsi un retrait sécurisé, par un tiers, d'un produit tel qu'un article ou une marchandise commandé sur un site marchand.

On comprend ici que cette approche permet également la fourniture ou l'accès à un service. Il est possible d'autoriser à distance l'accès à un service du type par exemple le retrait d'argent à un distributeur automatique.

Ainsi, on peut prévoir par exemple la fourniture de son pseudonyme pour autoriser son enfant, parti en voyage de classe à l'étranger, à retirer de l'argent sans être muni d'une quelconque carte bancaire. La distribution des billets se fait alors suite à l'authentification à distance du père de famille (ou de la mère), porteur de la carte.

D'autres applications sont également envisageables, comme par exemple :
- la préparation et la réalisation de virements par l'assistante du trésorier d'une entreprise. Dans une telle application, on peut prévoir que le trésorier donne, à distance, son autorisation pour chaque action (connexion au compte, validation de l'ordre de virement) et cela sans devoir communiquer à son assistante des informations confidentielles comme un identifiant et un mot de passe ou code secret et une carte de connexion (dispositif de type CAP EMV) ;
- la possibilité pour un parent d'autoriser à distance la génération d'une carte virtuelle dynamique pour un enfant. Ainsi, l'enfant souhaitant acheter un produit et/ou un service sur Internet peut renseigner sa demande de carte virtuelle en précisant le montant et la durée de validité (exemple : site « *Virtualis* » du Crédit Mutuel) et obtenir ladite carte virtuelle après authentification à distance du titulaire du compte bancaire (le parent) ;
- la mise en place d'un outil de lutte contre la fraude dite « au Président ». En effet, de nombreuses entreprises font l'objet de nombreuses fraudes où le fraudeur se fait passer pour le président, le directeur général ou l'un des membres du comité exécutif de l'entreprise. Dans ce cas de fraude, le fraudeur use ainsi de « son autorité » auprès de salariés de l'entreprise (comptabilité, trésorerie ...) pour leur exiger la réalisation de virements urgents vers des comptes externes. Avec le procédé selon la présente invention, il devient très facile d'authentifier à distance le demandeur de cette demande (et ce quelle que soit l'origine de la demande : appel téléphonique, fax, email, courrier) et d'éviter ainsi le risque financier important d'une telle fraude.

Avantageusement, le procédé d'authentification selon la présente invention comporte, lors d'une phase initiale d'enrôlement, une étape d'enregistrement au cours de laquelle l'identifiant public est enregistré dans la base de données suite à une saisie de l'identifiant par la première personne.

Cet identifiant peut être à usage unique (par exemple dans le cadre d'un retrait d'argent) ; cet identifiant peut également être conservé dans le temps pour plusieurs opérations.

Il est possible de modifier cet identifiant à discrétion.

Cet identifiant consiste donc en une donnée publique qui peut être communiquée à quiconque, et qui doit être unique (non attribuable à d'autres utilisateurs du service).

Toujours lors de cette phase d'enrôlement, le procédé comporte, suite à l'enregistrement, une étape d'association au cours de laquelle l'identifiant public saisi est associé dans la base de données à l'adresse du terminal de communication ; c'est-à-dire la deuxième adresse.

Cette phase d'enrôlement permet ainsi d'établir le lien entre le pseudonyme choisi par la première personne et son terminal de communication.

De préférence, cette deuxième adresse est un code d'identification relatif au module logiciel installé sur le terminal de communication.

Lorsque la première personne dispose de plusieurs terminaux de communication, par exemple un téléphone portable du type « *SmartPhone* », une tablette numérique, un ordinateur, le serveur de routage gère les différents codes d'identification en communiquant par « *push* » soit avec le dernier terminal utilisé, soit avec tous les terminaux simultanément.

Il peut également s'agir d'un numéro de téléphone ou d'une adresse du type adresse IP.

Bien évidemment, on comprendra qu'il peut s'agir de tout autre type de données d'identification permettant d'établir une communication avec le terminal de communication.

Avantageusement, la requête d'authentification comprend des données de sélection qui contiennent des informations relatives au produit et/ou au service préalablement sélectionné par la première personne : par exemple une description du produit et/ou du service, une référence, un prix, le site Internet marchand sur lequel l'achat a été réalisé, etc.

De préférence, le procédé selon l'invention prévoit un affichage de ces données, par exemple sur une interface du terminal de communication.

Ainsi, avant de s'authentifier, la première personne peut contrôler visuellement qu'il s'agit bien du produit et/ou du service précédemment sélectionné et acheté sur Internet.

Avantageusement, le dispositif d'authentification personnel comprend des premiers moyens de lecture biométrique configurés pour une lecture d'une empreinte digitale.

Avantageusement, le dispositif d'authentification personnel comprend des deuxièmes moyens de lecture biométrique configurés pour une lecture d'une empreinte rétinienne.

L'homme du métier comprendra ici que ces moyens combinés entre eux peuvent ainsi permettre si nécessaire une double-authentification avec l'empreinte digitale et l'empreinte rétinienne.

D'autres lectures biométriques peuvent également être envisagées dans le cadre de la présente invention.

Dans un mode de réalisation particulier, le procédé comporte, suite à l'étape d'authentification, une étape de validation au cours de laquelle le module logiciel d'authentification génère un certificat de validation, puis émet via le chemin d'accès le certificat de validation au serveur central pour autoriser le retrait du produit et/ou du service par la deuxième personne.

Avantageusement, le certificat de validation comprend une infrastructure à clés publiques (connue sous l'acronyme PKI), des informations relatives au produit et/ou au service préalablement sélectionné par la première personne (ici les données de sélection) ainsi que des informations relatives à l'identifiant public.

La réception de ce certificat par le serveur central permet le déclenchement de la délivrance du produit et/ou du service.

Corrélativement, l'objet de la présente invention porte sur un programme d'ordinateur qui comporte des instructions adaptées pour l'exécution des étapes du procédé tel que décrit ci-dessus, ceci notamment lorsque ledit programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

De même, l'objet de la présente invention porte sur un support d'enregistrement lisible par un ordinateur sur lequel est enregistré un programme d'ordinateur comprenant des instructions pour l'exécution des étapes du procédé tel que décrit ci-dessus.

D'une part, le support d'enregistrement peut être n'importe quel entité ou dispositif capable de stocker le programme. Par exemple, le support peut comporter un moyen de stockage, tel qu'une mémoire ROM, par exemple un CD-ROM ou une mémoire ROM de type circuit microélectronique, ou encore un moyen d'enregistrement magnétique, par exemple une disquette de type « *floppy disc* » ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

La présente invention porte également sur un système informatique comprenant des moyens informatiques configurés pour la mise en oeuvre du procédé décrit ci-dessus.

Plus particulièrement, le système selon l'invention est un système informatique pour l'authentification d'une première personne représentée sur un point de retrait par une deuxième personne ; ce système informatique présente une architecture configurée pour autoriser le retrait par la deuxième personne d'un produit et/ou d'un service préalablement sélectionné par la première personne.

Selon l'invention, le système comporte notamment :
- un dispositif d'authentification personnel appartenant à la première personne,
- un terminal de communication sur lequel est installé un module logiciel dédié à l'authentification de la première personne, le terminal de communication étant apte à communiquer avec le dispositif d'authentification personnel par des moyens de communication sans fil,
- une interface homme/machine, sur le point de retrait, configurée pour une saisie d'un identifiant public du type pseudonyme, préalablement communiqué par la première personne à la deuxième personne,
- un serveur central connecté à l'interface homme/machine et configuré pour transmettre l'identifiant public, saisi et relayé par l'interface, vers un serveur de routage déporté, et
- une base de données, connectée au serveur de routage, comprenant un lien d'association prédéterminé entre l'identifiant public et une adresse d'identification du terminal de communication,
dans lequel le serveur de routage est configuré pour transmettre, en fonction de la deuxième adresse associée audit identifiant public, la première adresse au terminal de communication,
dans lequel le module logiciel d'authentification est configuré pour établir un chemin d'accès direct entre le serveur central et le terminal de communication,
dans lequel le serveur central est configuré pour émettre via le chemin d'accès une requête d'authentification à destination du terminal de communication, et
dans lequel le dispositif d'authentification personnel comprend des moyens de lecture biométrique configurés pour une lecture d'une signature biométrique, caractéristique de la première personne, et des moyens d'authentification biométrique configurés pour comparer la signature lue avec une signature biométrique de référence enregistrée sur le dispositif d'authentification personnel, ceci afin d'autoriser le retrait du produit et/ou du service par la deuxième personne.

Ainsi, par ses différents aspects fonctionnels et structurels, la présente invention permet de remédier aux différents inconvénients rencontrés dans l'état de la technique en proposant une approche simple, sécurisée et universelle pour autoriser un retrait d'un produit et/ou d'un service ; cette approche prévoit la saisie par un tiers mandaté d'un identifiant public, non sécurisé, et l'authentification à distance de la personne à qui est destiné le produit et/ou le service.

### Brève description des figures annexées

D'autres caractéristiques et avantages de la présente invention ressortiront de la description ci-dessous, en référence aux figures 1 à 2 annexées qui en illustrent un exemple de réalisation dépourvu de tout caractère limitatif et sur lesquelles :
- la figure 1 représente une vue schématique de l'architecture d'un système informatique d'authentification selon un exemple de réalisation avantageux de la présente invention, et
- la figure 2 représente un organigramme illustrant le procédé d'authentification selon un exemple de réalisation avantageux de la présente invention.

### Description détaillée d'un mode de réalisation avantageux de la présente invention

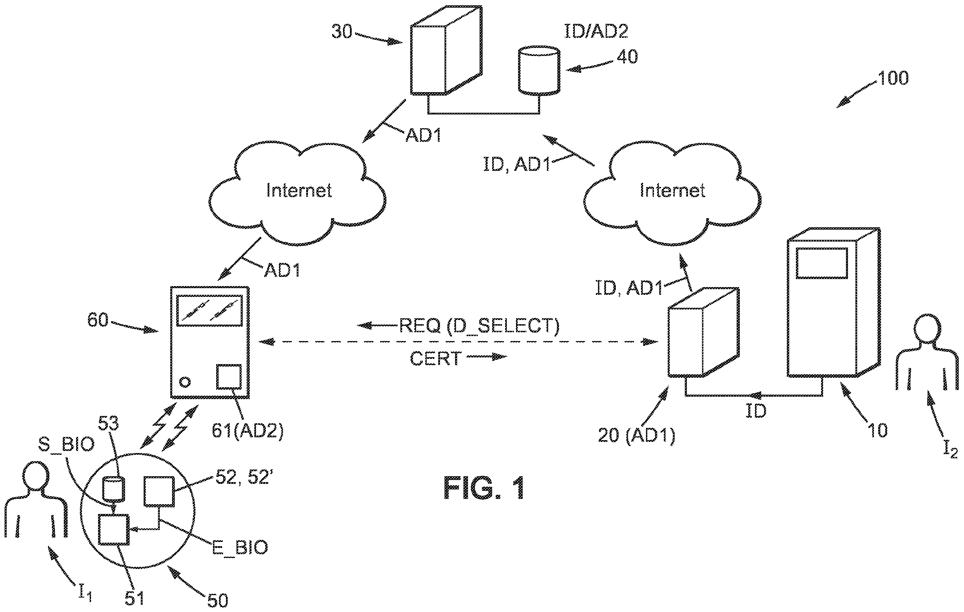

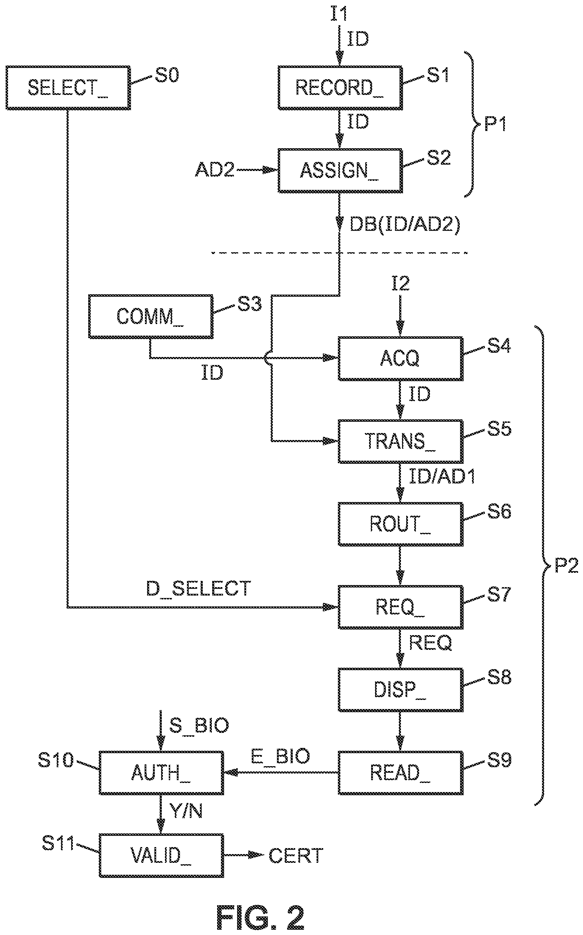

Une authentification à distance d'une personne pour autoriser le retrait par un tiers d'un produit et/ou d'un service va maintenant être décrite en faisant référence conjointement aux figures 1 à 2.

Dans l'exemple décrit ici, une première personne I1 sélectionne lors d'une étape S0 un article sur un site marchand. Elle valide ensuite cette sélection et procède à un paiement en ligne (sécurisé) de cet article.

Quelques jours plus tard, cette personne est invitée à venir récupérer l'article acheté dans un point de retrait par exemple un relais colis.

Bien souvent, cette invitation se fait par mail et un délai est ouvert pour retirer l'article ; passé ce délai (souvent quelques jours), l'article est renvoyé sur une plateforme logistique.

Dans l'exemple décrit ici, on se place dans une situation dans laquelle la première personne I1 est très occupée, par exemple pour des raisons professionnelles, et ne peut pas se déplacer sur le point de retrait dans les temps impartis pour récupérer son article.

Elle demande donc à une autre personne I2, appelée ici deuxième personne, d'aller récupérer son article en son nom sur le point de retrait ; de préférence, cette deuxième personne I2 est un membre de la famille.

Comme expliqué précédemment, il existe beaucoup de fraudes liées aux retraits.

Pour limiter ces fraudes, il est classiquement demandé la présentation d'une pièce d'identité et/ou d'un mandat signé par la première personne. Ceci est souvent contraignant.

La Demanderesse observe qu'il existe aujourd'hui aucun système informatisé simple et sécurisé permettant à la première personne I1 d'autoriser une transaction sur un point de retrait par la deuxième personne I2 pour le compte de la première personne I1.

Les seuls systèmes existants nécessitent l'utilisation d'une donnée secrète propre à l'acheteur (ici, la première personne I1).

Il existe également d'autres systèmes tels que ceux proposés dans le document WO 2008/065271 ; néanmoins, ces systèmes requièrent l'utilisation d'un code à usage unique généré spécifiquement pour un retrait *ad hoc*, ce qui est complexe et lourd à mettre en place.

De fait, dans les situations actuelles, l'acheteur ne peut pas de manière simple autoriser un tiers à s'authentifier en son nom pour retirer l'article, sauf par exemple à communiquer sa donnée secrète (ce qu'il ne veut pas, bien souvent).

L'objet de la présente invention vise à fournir une solution intégrée permettant de limiter les risques de fraude lorsqu'une personne se présente au nom d'une autre personne pour retirer un produit et/ou un service.

Ceci est rendu possible par la présente invention grâce à un système informatique d'authentification 100 comprenant les différents moyens qui vont être décrits dans ce qui va suivre.

Ainsi, dans l'exemple décrit ici, la première personne I1 communique lors d'une étape S3 à la deuxième personne I2 son identifiant dit identifiant public ID : il s'agit d'un simple pseudonyme.

Dans l'exemple décrit ici, ce pseudonyme se présente sous la forme d'un code alphanumérique de taille variable, choisi préalablement par la première personne I1.

Cet identifiant ID n'est pas sécurisé. Ceci signifie qu'il peut être public et connu de tous, ce qui est très différent du code à usage unique généré dans le document WO 2008/065271 spécifiquement pour une opération de retrait bien déterminée.

On note ici que cet identifiant ID a été saisi par la première personne I1 lors d'une phase d'enrôlement P1. Suite à cette saisie, l'identifiant ID a été enregistré dans une base de données 40 lors d'une étape S1.

Une fois enregistré, lors d'une étape S2, l'identifiant ID est associé dans cette base de données 40 à une adresse d'identification AD2, dite deuxième adresse, qui correspond à une adresse permettant d'entrer en communication avec le terminal de communication 60 de la première personne I1.

Plus précisément, dans l'exemple décrit ici, un module logiciel 61 est installé sur le terminal 60.

Ce module logiciel qui peut correspondre à une application logicielle du type « *apps »* présente un code d'identification qui correspond ici à cette deuxième adresse AD2.

Dans l'exemple décrit ici, la base de donnée 40 comporte donc un lien dit d'association entre ce code d'identification AD2 lié au module logiciel 61 et l'identifiant public ID.

Suite à cette phase d'enrôlement P1, il est prévu la phase de retrait P2 à proprement parler ; c'est-à-dire la phase dans laquelle la deuxième personne I2 se manifeste sur le point de retrait pour récupérer l'article acheté sur Internet par la première personne I1.

Lors de cette phase P2, la première personne I1 a communiqué lors de l'étape S3 son identifiant ID à la deuxième personne I2 (par exemple par mail ou par SMS).

Dans l'exemple décrit ici, la deuxième personne I2 se présente donc sur le point de retrait et, lors d'une étape S4, saisit sur une interface homme/machine 10 du type borne informatique cet identifiant ID.

Dans l'exemple décrit ici, la borne 10 est connectée à un serveur central 20 qui, lors d'une étape S5, transmet l'identifiant saisi ID à un serveur de routage 30.

En plus de l'identifiant, le serveur central 20 transmet au serveur 30 sa propre adresse AD1 (par exemple une adresse IP). L'émission de ces informations au serveur de routage est caractéristique de la présente invention.

Dans l'exemple décrit ici, le serveur central 20 émet une demande du type *« PseudoPathFinder* » auprès du serveur 30.

De préférence, ce serveur 30 est déporté dans le « *Cloud* ».

Ce serveur 30 joue le rôle de référentiel de routage.

En effet, ce serveur 30 est connecté à la base de données 40. Il connaît donc l'adresse AD2 associée à l'identifiant ID qu'il vient de recevoir.

La connaissance de l'ensemble de ces informations (AD1, AD2, ID) par le serveur de routage 30 est déterminante : elle permet d'effectuer une mise en relation entre le serveur central (AD1) du point de retrait et le terminal de communication 60 de la première personne I1.

On notera ici que si la base de données 40 ne connaît pas l'identifiant ID, alors une réponse est renvoyée directement au serveur central pour indiquer que le retrait ne peut pas être autorisé puisqu'il s'agit d'un identifiant inconnu.

Si l'identifiant est connu, le serveur de routage 30 connaît le lien entre l'identifiant ID et l'adresse AD2 ; il peut donc transmettre au terminal de communication 60 la première adresse AD1 associé au serveur central 20. Ceci peut se faire en mode « *push* ».

On comprendra ici que la première personne I1 peut détenir plusieurs terminaux sur chacun desquels est installée une application d'authentification dédiée. Par défaut, on prévoit que le serveur de routage 30 transmet la première adresse AD1 au dernier terminal de communication 60 utilisé par la première personne, c'est-à-dire à la dernière adresse AD2 active.

Sur réception de cette adresse AD1, le module logiciel 61 peut établir, par authentification mutuelle, un chemin d'accès entre le terminal 60 et le serveur central 20.

Ce chemin d'accès est un véritable canal de transmission bidirectionnelle, sécurisée par chiffrement.

Ceci est réalisé lors d'une étape dite de routage S6.

Suite à ce routage, le serveur central 20 émet (lors d'une étape S7) via le chemin d'accès une requête d'authentification REQ à destination du terminal de communication 60.

Cette requête d'authentification REQ comprend certaines informations D_SELECT relatives à l'article précédemment sélectionné par la première personne, par exemple le nom et la description de l'article, le site marchand sur lequel l'achat a été réalisé, etc.

Après réception de la requête par le terminal 60, ces informations sont affichées sur le terminal 60 lors d'une étape S8.

La première personne I1 peut donc vérifier, avant de s'authentifier, que les informations sont correctes et correspondent bien à la commande réalisée.

S'assurer que la personne I2 se présentant au point de retrait est bien la personne mandatée par la première personne I1 pour autoriser la délivrance de l'article est un des objectifs de la présente invention. Ceci est rendu possible par la présente invention qui prévoit une authentification de la personne I1 à distance.

En effet, seule cette personne I1 peut autoriser la personne I2 à retirer l'article sur le point de retrait. Cette autorisation se fait dans le cadre de la présente invention par une authentification biométrique de la personne I1.

Cette authentification biométrique est possible en utilisant un dispositif d'authentification personnel 50, du type objet connecté, apte à communiquer avec le terminal 60. De préférence, l'objet dédié « SESAME TOUCH® » est utilisé dans le cadre de la présente invention.

Le dispositif d'authentification personnel 50 comprend des moyens de lecture biométrique 52 configurés pour une lecture d'empreinte digitale.

Ainsi, suite à une lecture S9 d'une empreinte digitale E_BIO par ces moyens de lecture biométrique 52, l'empreinte E_BIO est comparée lors d'une étape d'authentification S10 à une signature biométrique de référence S_BIO, cette signature S_BIO étant enregistrée dans des moyens de stockage sécurisés 53 du dispositif d'authentification personnel 50.

Cette comparaison correspond ici à un test de similarité aboutissant à un résultat indiquant si les deux signatures sont identiques ou non.

Il est possible de prévoir des seuils de tolérance. De tels seuils sont prévus, notamment pour réduire les erreurs induites par une mauvaise lecture de l'empreinte digitale ou un mauvais positionnement du doigt.

Cette comparaison est réalisée à l'aide d'un processeur 51 intégré dans le dispositif 50 et configuré à cet effet. Le processeur 51 est configuré pour gérer de façon autonome ces seuils de tolérance et la comparaison entre les signatures E_BIO et S_BIO.

Comme évoqué précédemment, il peut être prévu des moyens de lecture biométrique additionnels 52' (ou complémentaires) permettant par exemple une lecture d'une empreinte rétinienne.

La Demanderesse observe que tout type d'authentification peut être envisagé ici dans le cadre de la présente invention.

En cas de comparaison positive, le retrait de l'article par la deuxième personne I2 peut être autorisé. Par comparaison positive, on entend ici que les signatures biométriques E_BIO et S_BIO sont similaires (avec la tolérance acceptée). Il y a « *matching* » entre les signatures.

Si tel est le cas, le résultat positif (Y pour « YES ») est envoyé au terminal 60, et le module logiciel 61 génère lors d'une étape S11 un certificat de validation CERT, puis émet via le chemin d'accès ce certificat de validation CERT au serveur central 20.

Dans l'exemple décrit ici, ce certificat de validation CERT comprend une infrastructure à clés publiques du type PKI, des informations relatives au produit et/ou au service préalablement sélectionné par la première personne I1 ainsi que des informations relatives à l'identifiant public ID.

Plus précisément, ce certificat CERT est signé par une PKI provenant du serveur de routage 30, dont la clé publique est connue de tous les fournisseurs de services, et donc du serveur central 20.

On comprendra ici qu'en cas de résultat négatif (N pour « NO »), aucun certificat n'est généré.

Lorsque le serveur central 20 reçoit ce certificat CERT avec cette PKI, l'opérateur sur le point de retrait peut décrypter à l'aide de la clé publique ce certificat et peut ainsi autoriser le retrait de l'article par la deuxième personne I2. Sur réception de ce certificat et connaissant la clé publique associée, le serveur 20 peut donc valider la commande, et éventuellement autoriser le prélèvement du compte bancaire de la première personne I1.

Grâce à cette authentification à distance, la première personne I1 qui a acheté l'article peut accorder la délivrance de sa commande à une deuxième personne I2.

Le fournisseur (par exemple le commerçant) est alors assuré que son client, c'est-à-dire la première personne, prend la responsabilité d'autoriser le retrait par la deuxième personne. Toujours grâce à l'invention, le tiers, ici la deuxième personne, n'a pas été obligée de fournir des informations personnelles au commerçant ; de la même façon, il n'a pas besoin de présenter de mandat ou sa carte d'identité car le client sait qu'il vient d'envoyer le tiers pour retirer sa commande.

Ainsi, la présente invention permet de simplifier de façon significative les systèmes existants. Grâce à la présente invention, une personne ne devra plus jamais fournir une donnée d'authentification secrète et personnelle lorsqu'elle demande à un tiers d'aller récupérer un produit et/ou un service sur un point de retrait.

De façon contraire, la présente invention nécessite uniquement la fourniture au tiers d'une donnée publique correspondant ici à un simple pseudonyme.

Ce pseudonyme est connu par un référentiel de routage qui permet l'établissement d'un canal de transmission sécurisé entre le terminal de communication de la personne ayant l'achat en ligne et le serveur central du point de retrait.

Ainsi, une fois saisi sur une borne du point de retrait, le pseudonyme est envoyé vers ce référentiel pour mettre en place de canal.

La personne I1 est alors prévenue via ce canal que la personne I2 qu'elle a mandaté est sur place pour le retrait de la marchandise ; elle n'a plus qu'à s'authentifier pour autoriser ce retrait.

Une telle approche offre de nombreuses perspectives, tant elle sécurise les retraits qu'elle s'ouvre également à de nouveaux services à distance.

On peut par exemple prévoir ce type d'authentification pour faciliter et sécuriser l'accès à des services bancaires (retrait, virement, ordre pour la bourse, etc.).

Ainsi, la présente invention, grâce aux différentes caractéristiques décrites ci-dessus, permet de remédier aux différents inconvénients ci-dessus de l'état de la technique. Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Procédé d'authentification d'une première personne (I1) représentée sur un point de retrait par une deuxième personne (I2) pour autoriser le retrait par ladite deuxième personne (I2) d'un produit et/ou d'un service préalablement sélectionné par ladite première personne (P1), ladite première personne (P1) étant munie d'un terminal de communication (60) sur lequel est installé un module logiciel (61) dédié à l'authentification de ladite première personne (P1), ledit terminal de communication (60) étant apte à communiquer avec un dispositif d'authentification personnel (50) par des moyens de communication sans fil,
ledit procédé mis en oeuvre par des moyens informatiques comprenant lors d'une phase de retrait (P2) les étapes suivantes :
- une étape d'acquisition (S4) au cours de laquelle un identifiant public (ID) du type pseudonyme, préalablement communiqué par la première personne (I1), est saisi par la deuxième personne (I2) sur une interface homme/machine (10) du point de retrait, puis est relayé à un serveur central (20) connecté à ladite interface (10),
- une étape de transmission (S5) au cours de laquelle ledit serveur central (20) transmet ledit identifiant public saisi (ID) et une adresse d'identification (AD1) dudit service central (20), dite première adresse (AD1), vers un serveur de routage (30), déporté, connecté à une base de données (40), ladite base (40) comprenant un lien d'association prédéterminé entre ledit identifiant public (ID) et une adresse d'identification (AD2) dudit terminal de communication (60), dite deuxième adresse (AD2),
- une étape de routage (S6) au cours de laquelle le serveur de routage (30) transmet, en fonction de la deuxième adresse (AD2) associée audit identifiant public (ID), la première adresse (AD1) audit terminal de communication (60), puis le module logiciel (61) établit un chemin d'accès direct entre le serveur central (20) et ledit terminal de communication (60),
- une étape de requête (S7) au cours de laquelle le serveur central (20) émet via ledit chemin d'accès une requête d'authentification (REQ) à destination dudit terminal de communication (60), et
- suite à une lecture (S9) par ledit dispositif d'authentification personnel (50) d'une signature biométrique (E_BIO), caractéristique de ladite première personne (I1), une étape d'authentification (S10) au cours de laquelle ladite signature lue (E_BIO) est comparée à une signature biométrique de référence (S_BIO) enregistrée sur le dispositif d'authentification personnel (50), pour autoriser le retrait du produit et/ou du service par ladite deuxième personne (I2).

2. Procédé selon la revendication 1, comprenant, lors d'une phase initiale d'enrôlement (P1), une étape d'enregistrement (S1) au cours de laquelle ledit identifiant public (ID) est enregistré dans ladite base de données (DB) suite à une saisie dudit identifiant (ID) par la première personne (I1).

3. Procédé selon la revendication 2, comprenant, suite à l'étape d'enregistrement (S1), une étape d'association (S2) au cours de laquelle ledit identifiant public (ID) est associé dans ladite base de données (40) à ladite deuxième adresse (AD2).

4. Procédé selon l'une quelconque des revendications précédentes, dans lequel ladite deuxième adresse (AD2) est un code d'identification relatif au module logiciel installé sur ledit terminal de communication (60).

5. Procédé selon l'une quelconque des revendications précédentes, dans lequel ledit identifiant public (ID) est un code alphanumérique.

6. Procédé selon l'une quelconque des revendications précédentes, dans lequel la requête d'authentification (REQ) comprend des données de sélection (D_SELECT) contenant des informations relatives au produit et/ou au service préalablement sélectionné par la première personne (I1).

7. Procédé selon la revendication 6, comprenant un affichage (S8) desdites données de sélection (D_SELECT) sur ledit terminal de communication (60).

8. Procédé selon l'une quelconque des revendications précédentes, dans lequel le dispositif d'authentification personnel (50) comprend des moyens de lecture biométrique (52) configurés pour une lecture d'une empreinte digitale.

9. Procédé selon l'une quelconque des revendications précédentes, dans lequel le dispositif d'authentification personnel (50) comprend des moyens de lecture biométrique (52') configurés pour une lecture d'une empreinte rétinienne.

10. Procédé selon l'une quelconque des revendications précédentes, comprenant, suite à l'étape d'authentification (S10), une étape de validation (S11) au cours de laquelle ledit module logiciel (61) génère un certificat de validation (CERT), puis émet via le chemin d'accès ledit certificat de validation (CERT) audit serveur central (20) pour autoriser le retrait du produit et/ou du service par ladite deuxième personne (I2), ledit certificat de validation (CERT) comprenant une infrastructure à clés publiques, des informations relatives au produit et/ou au service préalablement sélectionné par la première personne (I1) ainsi que des informations relatives à l'identifiant public (ID).

11. Procédé selon l'une quelconque des revendications précédentes, dans lequel ledit chemin d'accès est sécurisé par chiffrement.

12. Programme d'ordinateur comportant des instructions adaptées pour l'exécution des étapes du procédé selon l'une quelconque des revendications 1 à 11 lorsque ledit programme d'ordinateur est exécuté par au moins un processeur.

13. Support d'enregistrement lisible par un ordinateur sur lequel est enregistré un programme d'ordinateur comprenant des instructions pour l'exécution des étapes du procédé selon l'une quelconque des revendications 1 à 11.

14. Système informatique (100) pour l'authentification d'une première personne (I1) représentée sur un point de retrait par une deuxième personne (I2) afin d'autoriser le retrait par ladite deuxième personne (I2) d'un produit et/ou d'un service préalablement sélectionné par ladite première personne (I1),
ledit système (100) comportant :
- un dispositif d'authentification personnel (50) appartenant à la première personne (I1),
- un terminal de communication (60) sur lequel est installé un module logiciel (61) dédié à l'authentification de ladite première personne (P1), ledit terminal de communication (60) étant apte à communiquer avec ledit dispositif d'authentification personnel (50) par des moyens de communication sans fil,
- une interface homme/machine (10), sur le point de retrait, configurée pour une saisie d'un identifiant public (ID) du type pseudonyme, préalablement communiqué par la première personne (I1) à la deuxième personne (I2),
- un serveur central (20) connecté à ladite interface homme/machine (10) et configuré pour transmettre ledit identifiant public (ID), saisi et relayé par ladite interface (10), vers un serveur de routage (30) déporté,
- une base de données, connectée audit serveur de routage (30), comprenant un lien d'association prédéterminé entre ledit identifiant public (ID) et une adresse d'identification (AD2) dudit terminal de communication (60), dite deuxième adresse (AD2),
dans lequel ledit serveur de routage (30) est configuré pour transmettre, en fonction de la deuxième adresse (AD2) associée audit identifiant public (ID), la première adresse (AD1) audit terminal de communication (60),
dans lequel ledit module logiciel (61) est configuré pour établir un chemin d'accès direct entre le serveur central (20) et ledit terminal de communication (60),
dans lequel ledit serveur central (20) est configuré pour émettre via ledit chemin d'accès une requête d'authentification (REQ) à destination dudit terminal de communication (60), et
dans lequel le dispositif d'authentification personnel (50) comprend des moyens de lecture biométrique (52) configurés pour une lecture d'une signature biométrique (E_BIO), caractéristique de ladite première personne (I1), et des moyens d'authentification biométrique (51) configurés pour comparer ladite signature lue (E_BIO) avec une signature biométrique de référence (S_BIO) enregistrée sur le dispositif d'authentification personnel (50), pour autoriser le retrait du produit et/ou du service par ladite deuxième personne (I2).

15. Système (100) selon la revendication 14, comprenant des moyens informatiques configurés pour la mise en oeuvre des étapes du procédé selon l'une quelconque des revendications 1 à 11.

## Patentansprüche

1. Verfahren zur Authentifizierung einer ersten Person (I1), die an einer Abholstelle von einer zweiten Person (I2) vertreten wird, um das Abholen eines Produkts und/oder einer Dienstleistung, die vorher von der ersten Person (P1) ausgewählt wurden, durch die zweite Person (I2) zu gestatten, wobei die erste Person (P1) mit einem Kommunikationsendgerät (60) versehen ist, auf dem ein Softwaremodul (61) installiert ist, das für die Authentifizierung der ersten Person (P1) bestimmt ist, wobei das Kommunikationsendgerät (60) geeignet ist, mit einer persönlichen Authentifizierungsvorrichtung (50) durch drahtlose Kommunikationsmittel zu kommunizieren,
wobei das Verfahren durch Informatikmittel eingesetzt wird, umfassend bei einer Abholphase (P2) die folgenden Schritte:
- einen Eingabeschritt (S4), während dessen ein öffentlicher Identifikator (ID) vom Typ Pseudonym, der vorher von der ersten Person (I1) mitgeteilt wurde, von der zweiten Person (I2) auf einer Mensch/Maschine-Schnittstelle (10) der Abholstelle eingegeben wird, dann an einen Zentralserver (20), der an die Schnittstelle (10) angeschlossen ist, weitergegeben wird,
- einen Übertragungsschritt (S5), während dessen der Zentralserver (20) den eingegebenen Identifikator (ID) und eine Identifikationsadresse (AD1) des Zentralservers (20), erste Adresse (AD1) genannt, zu einem fernen Routingserver (30), der an eine Datenbasis (40) angeschlossen ist, überträgt, wobei die Datenbasis (40) eine vorbestimmte Assoziationsbeziehung zwischen dem öffentlichen Identifikator (ID) und einer Identifikationsadresse (AD2) des Kommunikationsendgeräts (60), zweite Adresse (AD2) genannt, umfasst,
- einen Routingschritt (S6), während dessen der Routingserver (30) in Abhängigkeit von der zweiten dem öffentlichen Identifikator (ID) zugeordneten Adresse (AD2) die erste Adresse (AD1) an das Kommunikationsendgerät (60) überträgt, dann das Softwaremodul (61) einen direkten Zugangsweg zwischen dem Zentralserver (20) und dem Kommunikationsendgerät (60) herstellt,
- einen Anfrageschritt (S7), während dessen der Zentralserver (20) über den Zugangsweg eine Authentifizierungsanfrage (REQ) in Richtung des Kommunikationsendgeräts (60) sendet, und
- nach einem Lesen (S9) einer biometrischen Signatur (E_BIO), die für die erste Person (I1) charakteristisch ist, durch die Authentifizierungsvorrichtung (50) einen Authentifizierungsschritt (S10), während dessen die gelesene Signatur (E_BIO) mit einer biometrischen Referenzsignatur (S_BIO) verglichen wird, die auf der persönlichen Authentifizierungsvorrichtung (50) aufgezeichnet ist, um das Abholen des Produkts und/oder der Dienstleistung durch die zweite Person (I2) zu gestatten.

2. Verfahren nach Anspruch 1, umfassend bei einer anfänglichen Erfassungsphase (P1) einen Registrierungsschritt (S1), während dessen der öffentliche Identifikator (ID) in der Datenbasis (DB) nach einer Eingabe des Identifikators (ID) durch die erste Person (I1) registriert wird.

3. Verfahren nach Anspruch 2, umfassend nach dem Registrierungsschritt (S1) einen Assoziationsschritt (S2), während dessen der öffentliche Identifikator (ID) in der Datenbasis (40) mit der zweiten Adresse (AD2) assoziiert wird.

4. Verfahren nach einem der vorhergehenden Ansprüche, bei dem die zweite Adresse (AD2) ein Identifizierungscode in Zusammenhang mit dem Softwaremodul ist, das auf dem Kommunikationsendgeräts (60) installiert ist.

5. Verfahren nach einem der vorhergehenden Ansprüche, bei dem der öffentliche Identifikator (ID) ein alphanumerischer Code ist.

6. Verfahren nach einem der vorhergehenden Ansprüche, bei dem die Authentifizierungsanfrage (REQ) Auswahldaten (D_SELECT) umfasst, die Informationen zu dem Produkt und/oder der Dienstleistung, die vorher von der ersten Person (I1) ausgewählt wurden, enthält.

7. Verfahren nach Anspruch 6, umfassend eine Anzeige (S8) der Auswahldaten (D_SELECT) auf dem Kommunikationsendgerät (60).

8. Verfahren nach einem der vorhergehenden Ansprüche, bei dem die persönliche Authentifizierungsvorrichtung (50) biometrische Lesemittel (52) umfasst, die für ein Lesen eines Fingerabdrucks eingerichtet sind.

9. Verfahren nach einem der vorhergehenden Ansprüche, bei dem die persönliche Authentifizierungsvorrichtung (50) biometrische Lesemittel (52') umfasst, die für ein Lesen einer Augenerkennung eingerichtet sind.

10. Verfahren nach einem der vorhergehenden Ansprüche, umfassend nach dem Authentifizierungsschritt (S10) einen Validierungsschritt (S11), während dessen das Softwaremodul (61) ein Validierungszertifikat (CERT) erzeugt, dann über den Zugangsweg das Validierungszertifikat (CERT) zu dem Zentralserver (20) sendet, um das Abholen des Produkts und/oder der Dienstleistung durch die zweite Person (I2) zu gestatten, wobei das Validierungszertifikat (CERT) eine Infrastruktur öffentlicher Schlüssel, Informationen zu dem Produkt und/oder der Dienstleistung, die vorher von der ersten Person (I1) ausgewählt wurden, sowie Informationen zu dem öffentlichen Identifikator (ID) umfasst.

11. Verfahren nach einem der vorhergehenden Ansprüche, bei dem der Zugangsweg durch Verschlüsselung gesichert ist.

12. Computerprogramm, umfassend Anweisungen, die für die Ausführung der Schritte des Verfahrens nach einem der Ansprüche 1 bis 11 angepasst sind, wenn das Computerprogramm von mindestens einem Prozessor ausgeführt wird.

13. Aufzeichnungsträger, der von einem Computer lesbar ist, auf dem ein Computerprogramm aufgezeichnet ist, umfassend Anweisungen für die Ausführung der Schritte des Verfahrens nach einem der Ansprüche 1 bis 11.

14. Informatiksystem (100) für die Authentifizierung einer ersten Person (I1) die an einer Abholstelle von einer zweiten Person (I2) vertreten wird, um das Abholen eines Produkts und/oder einer Dienstleistung, die vorher von der ersten Person (I1) ausgewählt wurden, durch die zweite Person (I2) zu gestatten, wobei das System (100) umfasst:
- eine persönliche Authentifizierungsvorrichtung (50), die der ersten Person (I1) gehört,
- ein Kommunikationsendgerät (60), auf dem ein Softwaremodul (61) installiert ist, das für die Authentifizierung der ersten Person (P1) bestimmt ist, wobei das Kommunikationsendgerät (60) geeignet ist, mit der persönlichen Authentifizierungsvorrichtung (50) durch drahtlose Kommunikationsmittel zu kommunizieren,
- eine Mensch/Maschine-Schnittstelle (10) an der Abholstelle, die für eine Eingabe eines öffentlichen Identifikators (ID) vom Typ Pseudonym eingerichtet ist, der vorher von der ersten Person (I1) an die zweite Person (I2) mitgeteilt wurde
- einen Zentralserver (20), der an die Mensch/Maschine-Schnittstelle (10) angeschlossen und eingerichtet ist, um den öffentlichen Identifikator (ID), der von der Schnittstelle (10) eingegeben und weitergegeben wurde, zu einem fernen Routingserver (30) zu übertragen,
- eine Datenbasis, die an den Routingserver (30) angeschlossen ist, umfassend eine vorbestimmte Assoziationsbeziehung zwischen dem öffentlichen Identifikator (ID) und einer Identifizierungsadresse (AD2) des Kommunikationsendgeräts (60), zweite Adresse (AD2) genannt,
wobei der Routingserver (30) eingerichtet ist, um in Abhängigkeit von der zweiten Adresse (AD2), die mit dem öffentlichen Identifikator (ID) assoziiert ist, die erste Adresse (AD1) an das Kommunikationsendgerät (60) zu übertragen,
wobei das Softwaremodul (61) eingerichtet ist, um einen direkten Zugangsweg zwischen dem Zentralserver (20) und dem Kommunikationsendgerät (60) herzustellen,
wobei der Zentralserver (20) eingerichtet ist, um über den Zugangsweg eine Authentifizierungsanfrage (REQ) in Richtung des Kommunikationsendgeräts (60) zu senden, und wobei die persönliche Authentifizierungsvorrichtung (50) biometrische Lesemittel (52), die für ein Lesen einer biometrischen Signatur (E_BIO), die für die erste Person (I1) charakteristisch sind, eingerichtet ist, und biometrische Authentifizierungsmittel (51) umfasst, die eingerichtet sind, um die gelesene Signatur (E_BIO) mit einer biometrischen Referenzsignatur (S_BIO) zu vergleichen, die auf der persönlichen Authentifizierungsvorrichtung (50) aufgezeichnet ist, um das Abholen des Produkts und/oder der Dienstleistung durch die zweite Person (I2) zu gestatten.

15. System (100) nach Anspruch 14, umfassend Informatikmittel, die für den Einsatz der Schritte des Verfahrens nach einem der Ansprüche 1 bis 11 eingerichtet sind.

## Claims

1. Method for the authentication of a first person (I1) represented at a collection point by a second person (12) so as to authorise said second person (12) to collect a product and/or a service previously selected by said first person (P1),
said first person (P1) being provided with a communication terminal (60) on which a software module (61) dedicated to the authentication of said first person (P1) is installed, said communication terminal (60) being capable of communicating with a personal authentication device (50) via wireless communication means,
said method implemented by computer means comprising during a collection phase (P2) the following steps:
- an acquisition step (S4) during which an alias type public identifier (ID), previously communicated by the first person (I1), is entered by the second person (12) on a human/machine interface (10) of the collection point, then is relayed to a central server (20) connected to said interface (10),
- a transmission step (S5) during which said central server (20) transmits said entered public identifier (ID) and an identification address (AD1) of said central service (20), or first address (AD1), towards a remote routing server (30) connected to a database (40), said database (40) comprising a predetermined association link between said public identifier (ID) and an identification address (AD2) of said communication terminal (60), or second address (AD2),
- a routing step (S6) during which the routing server (30) transmits, according to the second address (AD2) associated with said public identifier (ID), the first address (AD1) to said communication terminal (60), then the software module (61) establishes a direct access path between the central server (20) and said communication terminal (60),
- a query step (S7) during which the central server (20) sends via said access path an authentication request (REQ) towards said communication terminal (60), and
- following a reading (S9) by said personal authentication device (50) of a biometric signature (E_BIO), characteristic of said first person (I1), an authentication step (S10) during which said read signature (E_BIO) is compared to a reference biometric signature (S_BIO) recorded on the personal authentication device (50), to authorise the collection of the product and/or service by said second person (12).

2. Method according to claim 1, comprising, during an initial enrolment phase (P1), a registering step (S1) during which said public identifier (ID) is registered in said database (DB) following an entry of said identifier (ID) by the first person (I1).

3. Method according to claim 2, comprising, following the registering step (S1), an association step (S2) during which said public identifier (ID) is associated in said database (40) with said second address (AD2).

4. Method according to any one of the preceding claims, wherein said second address (AD2) is an identification code relating to the software module installed on said communication terminal (60).

5. Method according to any one of the preceding claims, wherein said public identifier (ID) is an alphanumeric code.

6. Method according to any one of the preceding claims, wherein the authentication request (REQ) comprises selection data (D_SELECT) containing information relating to the product and/or service previously selected by the first person (I1).

7. Method according to claim 6, comprising a display (S8) of said selection data (D_SELECT) on said communication terminal (60).

8. Method according to any one of the preceding claims, wherein the personal authentication device (50) comprises biometric reading means (52) configured for reading a fingerprint.

9. Method according to any one of the preceding claims, wherein the personal authentication device (50) comprises biometric reading means (52') configured for reading a retinal print.

10. Method according to any one of the preceding claims, comprising, following the authentication step (S10), a validation step (S11) during which said software module (61) generates a validation certificate (CERT), then sends via the access path said validation certificate (CERT) to said central server (20) to authorise the collection of the product and/or service by said second person (12), said validation certificate (CERT) comprising a public keys infrastructure, information relating to the product and/or service previously selected by the first person (I1) as well as information relating to the public identifier (ID).

11. Method according to any one of the preceding claims, wherein said access path is secured by encryption.

12. Computer program including instructions suitable for executing the steps of the method according to any one of claims 1 to 11 when said computer program is run by at least one processor.

13. Computer-readable recording medium whereon is recorded a computer program comprising instructions for executing the steps of the method according to any one of claims 1 to 11.

14. Computer system (100) for the authentication of a first person (I1) represented at a collection point by a second person (12) so as to authorise said second person (12) to collect a product and/or a service previously selected by said first person (P1), said system (100) including:
- a personal authentication device (50) belonging to the first person (I1),
- a communication terminal (60) on which a software module (61) dedicated to the authentication of said first person (P1) is installed, said communication terminal (60) being capable of communicating with said personal authentication device (50) via wireless communication means,
- a human/machine interface (10), at the collection point, configured for entry of an alias type public identifier (ID), previously communicated by the first person (I1) to the second person (12),
- a central server (20) connected to said human/machine interface (10) and configured to transmit said public identifier (ID), entered and relayed by said interface (10), towards a remote routing server (30),
- a database, connected to said routing server (30), comprising a predetermined association link between said public identifier (ID) and an identification address (AD2) of said communication terminal (60), or second address (AD2), wherein said routing server (30) is configured to transmit, according to the second address (AD2) associated with said public identifier (ID), the first address (AD1) to said communication terminal (60),
wherein said software module (61) is configured to establish a direct access path between the central server (20) and said communication terminal (60),
wherein said central server (20) is configured to send via said access path an authentication request (REQ) towards said communication terminal (60), and
wherein the personal authentication device (50) comprises biometric reading means (52) configured for reading a biometric signature (E_BIO), characteristic of said first person (I1), and biometric authentication means (51) configured to compare said read signature (E_BIO) with a reference biometric signature (S_BIO) recorded on the personal authentication device (50), to authorise the collection of the product and/or service by said second person (12).

15. System (100) according to claim 14, comprising computing means configured for the implementation of the steps of the method according to any one of claims 1 to 11.
